# EUROPEAN PATENT SPECIFICATION

(11) **EP 2 224 703 B1**
(45) Date of publication and mention of the grant of the patent: **20.09.2017**
(21) Application number: 09153813.2
(22) Date of filing: 26.02.2009
(51) Int. Cl.: H04M 1/725, H04M 1/60

(54) **Mobile wireless communications device with novelty voice alteration and related methods**
Mobile Funkkommunikationsvorrichtung mit neuartiger Stimmenänderung und zugehörige Verfahren
Dispositif de communications sans fil mobile avec une nouvelle altération de la voix et procédés correspondants

(43) Date of publication of application: 01.09.2010
(73) Proprietor: BlackBerry Limited, Waterloo, ON N2K 0A7 (CA)
(72) Inventor: Stenmark, Fredrik, Waterloo, Ontario, N2L 3W8 (CA); Hanson, Daniel, Waterloo, Ontario, N2L 3W8 (CA)
(74) Representative: Fennell, Gareth Charles

(56) References cited:
- EP-A- 1 560 405
- WO-A-02/39424
- WO-A-2004/021686
- WO-A-2007/018882
- FR-A- 2 830 718
- US-A1- 2003 014 246
- US-A1- 2006 189 357
- US-B1- 6 813 490

## Description

### Technical Field

The present disclosure relates to the field of wireless communications, and, more particularly, to mobile wireless communications devices with voice alteration and related methods.

### Background

Mobile communications devices have become an integral part of society over the last two decades. Indeed, more than eighty-two percent of Americans own a mobile communications device, for example, a cell phone device. Even further, international cell phone device penetration has reached 3.3 billion units. In other words, approximately half the world's population has a cell phone device. The typical cell phone device includes an antenna, and a transceiver coupled to the antenna. The transceiver and the antenna cooperate to transmit and receive communications signals with a network infrastructure, usually maintained by a cell phone provider.

Although the first cell phone devices typically included only voice or limited short message service capabilities, the capabilities of cell phone devices have increased greatly over the last decade. More so, the typical "smart phone," i.e. a cell phone device with advanced capabilities, rivals the processing power and memory of desktop personal computers of a decade earlier. For example, the typical smart phone is capable of running a variety of advanced programs spanning from typical word processing software to global positioning system navigation software.

As the capabilities of cell phone devices have increased, cell phone providers have gained access to new potential revenues streams. For example, cell phone providers sell multimedia content to their subscribers. More specifically, the cell phone providers typically sell ring tones and digital music files via the cell phone. The cell phone providers charge small fees for each transaction, which is separate from the typical monthly subscription fee.

Another recently developed potential revenue stream is the sale of third party applications for the cell phone devices. In other words, the cell phone providers provide a venue for third parties to sell their software to subscribers. Of course, the cell phone providers typically derive a fee from the third parties for providing the venue. A particularly advantageous venue for these third party applications is the so-called mobile application store platform. For example, the Application Center of Research In Motion Limited, the assignee of the present application, provides an on-device platform for third party applications. Because of the easy access to a plurality of third party applications and the capability of paying for such applications wirelessly via the cell phone subscriber's account, the mobile application store platform provides a robust consumer solution with great potential for large revenue.

Voice alteration telephony technology has been available for landlines for some time. Typical approaches include, for example, acoustic couplers, complex personal computer based software using external microphones, and other hardware based approaches. Voice alteration is also available for cell phone devices for identity concealment, but typically requires some form of external attachment or accessory. The known approaches may suffer from several drawbacks, for example, bulkiness and limited availability.

EP 1560405 describes a communication terminal comprising an interface for input of a first audio signal, a communication signal from said first audio signal and a transmitter for transmitting said communication signal to a receiver.

WO 2004/021686 describes a telecommunication terminal comprising a recording device for recording acoustic user information, a memory for storing acoustic effect data and a mixing device for modifying recorded user information using acoustic effect data stored in the memory.

US 2006/0189357 describes a mobile communication apparatus and method aim to alter telephone audio functions to a preset altered sound.

WO 2007/018882 describes a communication device for receiving voice input from a user and a processor programmed to receive a predetermined type of phone call or

an indication of a caller indication from a calling party and warp a voice input from the user of the communication device based on the caller indication.

WO 02/39424 describes a voice avatar module for implementing a voice avatar for multiuser entertainment services allowing voice-based communication over a wireless network.

US 2003/0014246 describes an apparatus for voice modulation in a mobile terminal comprising a voice input unit being inputted a voice of a subscriber and generating an analog voice signal and a voice modulation unit for modulating the generated analog voice signal.

US 6813490 describes a method and apparatus for increasing the intelligibility of speech signals received by mobile stations via adapting some of the acoustic parameters of speech in the frequency domain.

FR 2830718 describes a portable telephone voice modification mechanism with an electronic unit which deforms the vocal tone input to produce different sound effects.

### Brief Description of the Drawings

FIG. 1 is a schematic diagram of a mobile wireless communications device according to the present disclosure.
FIG. 2 is a more detailed schematic diagram of the mobile wireless communications device of FIG 1.
FIG. 3 is a flowchart illustrating operation of the mobile wireless communications device of FIG 1.
FIG. 4 is another flowchart illustrating operation of the mobile wireless communications device of FIG 1.

### Detailed Description of the Embodiments

The invention is as set out in independent claims 1 and 6, preferred forms being set out in dependent claims 2 to 5, 7 and 8. The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout.

A mobile wireless communications device may include a housing, a wireless transceiver carried by the housing, at least one audio transducer carried by the housing, and a novelty voice alteration processor carried by the housing and coupled to the wireless transceiver and the audio transducer and configured to alter voice communications. Advantageously, the voice alteration is performed without use of an external accessory or an adapter. In addition, the voice alteration may provide entertainment value for a user of the mobile wireless communications device.

More specifically, the novelty voice alteration processor may comprise a memory and a processor cooperating therewith to alter the voice communications. In some embodiments, the novelty voice alteration processor may download novelty voice alteration code to the memory via the wireless transceiver.

Furthermore, the novelty voice alteration processor may be configured to alter voice communications input to the audio transducer and transmitted via the wireless transceiver. Also, the novelty voice alteration processor may also be configured to alter voice communications output by the audio transducer and received via the wireless transceiver.

The novelty voice altering processor may be further configured to selectively alter the voice communications. For example, the novelty voice altering processor may be further configured to selectively alter the voice communications based upon an identity of a user. Also, the novelty voice altering processor may be further configured to selectively alter the voice communications based upon an identity of a user by shifting at least part of the voice communications from a first frequency range to a second frequency range.

In other embodiments, the novelty voice altering processor may be further configured to add false background sounds to the altered voice communications. For example, the false background sounds may comprise at least one of crowd noise, static noise, fading channel noise, or street noise.

Additionally, the novelty voice altering processor may be further configured to add music to the altered voice communications. More particularly, the novelty voice alteration processor may be configured to alter at least one of a pitch value, a time constant value, a reverberation value, an overtone value, a compression value, or an equalization value.

Another aspect is directed to a method of operating a mobile wireless communications device comprising a housing, a wireless transceiver carried by the housing, at least one audio transducer carried by the housing, and a novelty voice alteration processor carried by the housing and coupled to the wireless transceiver and the at least one audio transducer. The method may include configuring the novelty voice alteration processor to alter voice communications.

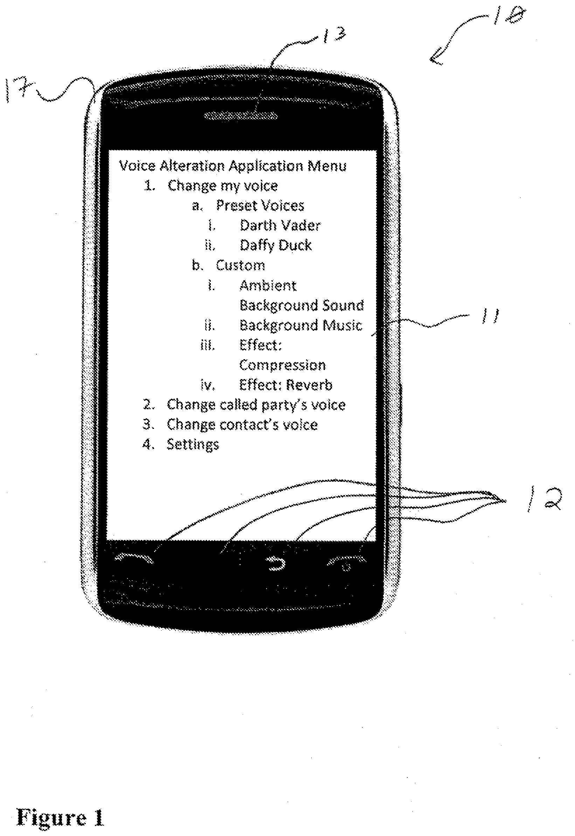

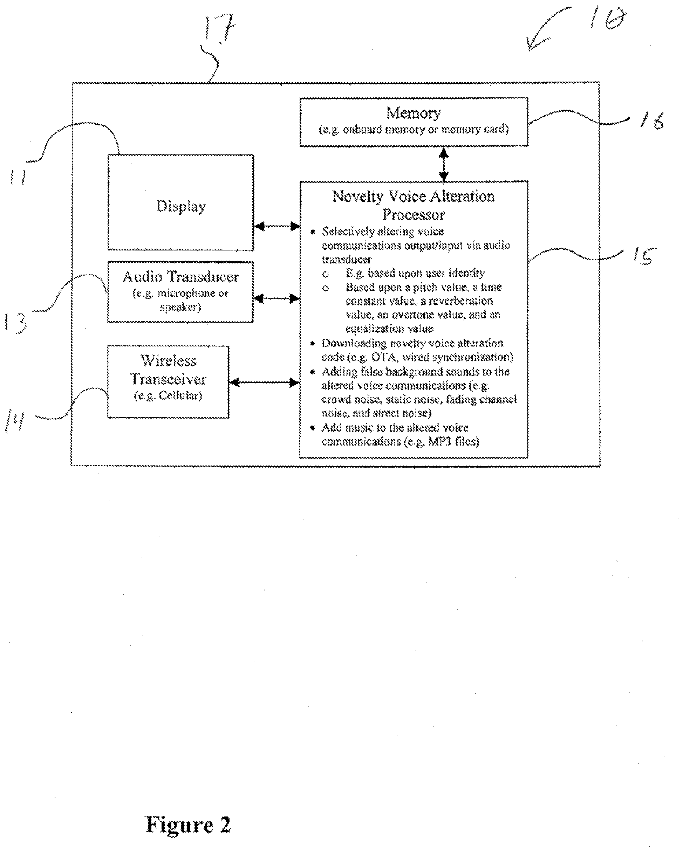

Referring initially to FIGS. 1-2, a mobile wireless communications device **10** is now described. The mobile wireless communications device **10** illustratively includes a housing **17,** a wireless transceiver **14** carried by the housing, an audio transducer **13** carried by the housing, and a novelty voice alteration processor **15** carried by the housing and coupled to the wireless transceiver and the audio transducer. The mobile wireless communications device **10** also illustratively includes mechanical buttons **12** for operation of the device.

As will be appreciated by those skilled in the art, the audio transducer **13** may include one or more of a microphone and a speaker, for example, and the wireless transceiver **14** may comprise one or more of a global positioning system transceiver and a cellular transceiver, i.e. at least one of a Global System for Mobile communications (GSM) transceiver or a code division multiple access (CDMA) transceiver. For example and as will be appreciated by those skilled in the art, the wireless transceiver **14** may comprise one or more of 3G Wideband Code Division Multiple Access (W-CDMA)/Universal Mobile Telecommunications System (UMTS) or 4G Long Term Evolution (LTE) wireless transceivers.

The mobile wireless communications device **10** illustratively includes a memory **16,** for example, an on-board/on-chip memory or a removable memory card or both. As will be appreciated by those skilled in the art, the memory **16** may store program code, for example, voice alteration program code. The mobile wireless communications device **10** also illustratively includes a display **11** coupled to and cooperating with the novelty voice alteration processor **15.** The display **11** may comprise, for example, a transmissive thin film transistor liquid crystal display.

As will be appreciated by those skilled in the art, the novelty voice alteration processor **15** is configured to alter voice communications. Specifically, the novelty voice alteration processor **15** cooperates with the memory **16** to execute the voice alteration program code stored therein. Advantageously, the novelty voice alteration processor **15** may download the novelty voice alteration program code to the memory **16** via the wireless transceiver **14,** for example, the user may access a mobile application store platform, for example, the Application Center of Research In Motion Limited, the assignee of the present application.

Advantageously, the mobile wireless communications device **10** may manipulate and alter the voice communications internally using the on-board processing and memory resources. The novelty voice alteration processor **15** advantageously may operate without the need of external resources, such as network resource assistance. For example, U.S. Patent No. 6,404,872 to Goldberg et al. discloses a system for voice alteration where the voice alteration is performed within the network infrastructure.

The novelty voice alteration processor **15** advantageously may operate without the need of bulky external attachments of typical prior art approaches. For example, the Mobile Phone Voice Changer, as available from BrickHouse Electronics L.L.C., includes a voice alteration external attachment for coupling to a mobile telephone device.

Although the novelty voice alteration processor **15** may be applied by a user for purposes of amusement, the mobile wireless communications device **10** having the novelty voice alteration processor advantageously may provide many practical benefits as well. For example, with individuals having hearing loss in certain audible frequencies, a voice altered with the novelty voice alteration processor **15** can be shifted to frequencies in which the hearing loss of the listener is less pronounced, thereby enabling the listener to more readily hear what is said.

In other words, the internal, on-board, on-chip processor of the mobile wireless communications device **10** supports the operations of the novelty voice alteration processor **15.** Indeed, this integrated and internal approach maintains the mobile nature of the device. Of course, this integrated and internal approach does not preclude the use of typical audio accessories, such as, Bluetooth wireless audio handset/speaker phone systems and typical wired handsets, for example.

The novelty voice alteration processor **15** changes the sound of voice communications transmitted or received or both by the mobiles wireless communications device **10.** As will appreciated by those skilled in the art, during a typical cell phone device conversation between a local user and a distant user, the novelty voice alteration processor **15** alters one or both of the local user's voice and the distant user's voice.

More specifically, the novelty voice alteration processor **15** is configured to alter voice communications input via the audio transducer (microphone) **13** and transmitted via the wireless transceiver **14,** i.e. outgoing voice communications. Also, the novelty voice alteration processor **15** is also configured to alter voice communications output by the audio transducer **13** and received via the wireless transceiver **14,** i.e. incoming voice communications.

Advantageously, the voice alteration may be kept local, i.e. one-sided voice alteration, and not transmitted to the distant user, i.e. the phone conversation sounds routine and typical to the distant user, thereby enhancing the novelty purposes of the novelty voice alteration processor **15.** Alternatively, the voice alteration may be two-sided, i.e. the mobile wireless communications device **10** would transmit the altered voice communications to the distant user.

The novelty voice alteration processor **15** is configured to alter at least one of a pitch value, a time constant value, a reverberation value, an overtone value, a compression value, or an equalization value of the voice communications. The aforementioned values may form a voice alteration set to provide a desired voice alteration. In advantageous embodiments, the mobile wireless communications device **10** may have a plurality of desired voice alteration sets stored in the memory **16** or readily available for user download from the mobile application store platform. The desired voice alteration sets may provide voice alteration to mimic famous celebrities and fictional characters, for example, the illustrated Darth Vader and Daffy Duck.

As will be appreciated by those skilled in the art, the novelty voice alteration processor **15** may alter the voice communications based upon several methods, for example, by sampling voice data with a buffer and using fast Fourier transforms (FFT) to convert it into the frequency domain. The voice data is then modulated in the frequency domain. Inverse FFTs are performed to return the altered voice data into the time domain. One possible technique for modulating the voice data in the frequency domain involves shifting one or more frequency components of the voice to higher or lower frequencies. Applying such techniques, it is possible to alter a voice so that the voice may be better heard by an individual having hearing loss in certain audible frequencies.

Moreover, the local user of the mobile wireless communications device **10** may create custom voice alteration sets by individually setting each voice alteration value. In particularly advantageous embodiments, the local user may utilize the illustrated menu to manipulate these features.

As will be appreciated by those skilled in the art, if the local user selects a longer time constant value for a desired voice alteration set, i.e. which alters the voice data to extend further across the time domain. The memory **16** may serve as a buffer to store input unaltered voice communications until the alteration lag is extinguished.

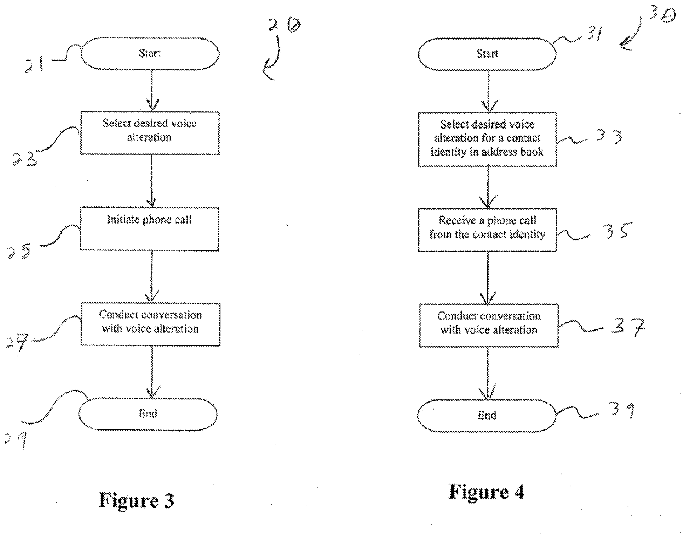

Referring additionally and briefly to FIG. 3 and flowchart **20,** the process of setting a desired voice alteration for a phone conversation begins at Block **21.** The local user selects a desired voice alteration set at Block **23** and initiates, in typical fashion, the phone call at Block **25.** At Block **27,** the local user conducts the phone conversation with voice alteration and ends the voice communications when desired. (Block **29**).

Referring additionally and briefly to FIG. 4 and flowchart **30,** in some embodiments, the novelty voice altering processor **15** may be further configured to selectively alter the voice communications. As will be appreciated by those skilled in the art, the mobile wireless communications device **10** stores a list of contacts within the memory **16.** For example, the novelty voice altering processor **15** may be further configured to selectively alter the voice communications based upon an identity of a user (either a local user or a distant user or both). In the illustrated embodiment, the novelty voice altering processor **15** selectively alters the voice communications of the local user to shift one or more frequencies of the voice communication from the frequency ranges that are problematic to the distant user, who will be hearing the voice communication of the local user. By moving some or all of voice communication frequencies from the problematic range to easier-to-hear ranges, the local user's voice can be more easily heard by the distant user. Information about what ranges are better or worse for particular users (which can be obtained from sources such as conventional audiograms or simple trial-and-error) can be programmed into mobile wireless communications device **10** and stored within memory **16** as part of the contact information. Beginning at Block **31,** the local user may select a desired voice alteration set for a contact at Block **33.** When communication with a particular contact begins at Block **35,** the novelty voice alteration processor **15** automatically loads a desired voice alteration set for that voice communication and alters the voice communications during the phone conversation. (Block **37**). The process ends at Block **39.**

In other embodiments, the novelty voice altering processor **15** may be further configured to add false background sounds to the altered voice communications. For example, the false background sounds may comprise at least one of crowd noise, static noise, fading channel noise, or street noise. Advantageously, the novelty voice altering processor **15** may provide the distant user with the false illusion that the local user in situated in the corresponding crowded street or restaurant. Alternatively, the fading channel noise provides the distant user with the false illusion that the local user is entering an area with less than desirable network coverage, thereby providing the local user with pretence to end the cell phone conversation. Indeed, the novelty voice altering processor 15 may be set to enable the false background noise after a set period of time has passed when a particular contact calls.

In yet other embodiments, the novelty voice altering processor **15** may be further configured to add music to the altered voice communications. More specifically, the mobile wireless communications device **10** may store audio media files, for example, mp3 and wav files, within the memory **16.** In addition to the voice alteration features discussed above, the novelty voice altering processor **15** may add playback from these audio media files into the voice communications. As will be appreciated by those skilled in the art, the selective voice alteration features discussed above, for example, contact based selective voice alteration or time delayed voice alteration, may be applied similarly to the above false background sounds and music features.

Another aspect is directed to a method of operating a mobile wireless communications device **10** comprising a housing **17,** a wireless transceiver **14** carried by the housing, at least one audio transducer **13** carried by the housing, and a novelty voice alternation processor **15** carried by the housing and coupled to the wireless transceiver and the at least one audio transducer. The method may include configuring the novelty voice alteration processor **15** to alter voice communications.

Many modifications and other embodiments of the present disclosure will come to the mind of one skilled in the art having the benefit of the teachings presented in the foregoing descriptions and the associated drawings. Therefore, it is understood that the present disclosure is not to be limited to the specific embodiments disclosed, and that modifications and embodiments are intended to be included within the scope of the appended claims.

## Claims

1. A mobile cellular communications device (10) comprising:
a housing (17);
a cellular transceiver (14) carried by said housing;
at least one audio transducer (13) carried by said housing;
a memory (16) carried by said housing; and
a voice alteration processor (15) carried by said housing and coupled to said cellular transceiver, said at least one audio transducer, and said memory, said voice alteration processor configured to:
download voice alteration code and at least one set of voice communications parameters from a mobile application store platform, each set of voice communications parameters comprising a pitch value, a time constant value, a reverberation value, an overtone value, and an equalization value;
store a plurality of contacts in said memory, each contact comprising preferred frequency range data;
selectively alter voice communications based upon an identity of a calling user, the respective preferred frequency range data for the calling user, and the at least one set of voice communications parameters, the altering of the voice communications being two-sided and including shifting at least part of the voice communications from a first frequency range to a second frequency range based upon the preferred frequency range data of the calling user, and;
add false background sounds to the altered voice communications.

2. The mobile cellular communications device according to Claim 1 wherein said voice alteration processor is further configured to download the voice alteration code to said memory via said cellular transceiver.

3. The mobile cellular communications device according to Claim 1 wherein said voice alteration processor is configured to alter voice communications input to said at least one audio transducer and transmitted via said cellular transceiver.

4. The mobile cellular communications device according to Claim 1 wherein said voice alteration processor is configured to alter voice communications output by said at least one audio transducer and received via said cellular transceiver.

5. The mobile cellular communications device according to Claim 1 wherein said voice altering processor is further configured to add music to the altered voice communications.

6. A method of operating a mobile cellular communications device (10) comprising a housing (17), a cellular transceiver (14) carried by the housing, at least one audio transducer (13) carried by the housing, a memory (16) carried by the housing, and a voice alteration processor (15) carried by the housing and coupled to the cellular transceiver, the memory, and the at least one audio transducer, the method comprising the steps of:
configuring the voice alteration processor to download voice alteration code and at least one set of voice communications parameters from a mobile application store platform, each set of voice communications parameters comprising a pitch value, a time constant value, a reverberation value, an overtone value and an equalization value;
configuring the voice alteration processor to store a plurality of contacts in the memory, each contact comprising preferred frequency range data;
configuring the voice alteration processor to selectively alter voice communications based upon an identity of a calling user, the respective preferred frequency range data for the calling user, and the at least one set of voice communications parameters, the altering of the voice communications being two-sided and including shifting at least part of the voice communications from a first frequency range to a second frequency range based upon the preferred frequency range data of the calling user; and
configuring the voice altering processor to add false background sounds to the altered voice communications.

7. The method according to Claim 6 further comprising the step of downloading the voice alteration code via the cellular transceiver.

8. The method according to Claim 6 further comprising the step of:
configuring the voice alteration processor to alter voice communications input to the at least one audio transducer and transmitted via the cellular transceiver; and
configuring the voice alteration processor to alter voice communications output by the at least one audio transducer and received via the cellular transceiver.

## Patentansprüche

1. Mobilfunkvorrichtung (10), umfassend:
ein Gehäuse (17);
einen Mobilfunk-Sendeempfänger (14), der von dem Gehäuse getragen wird;
mindestens einen Audio-Wandler (13), der von dem Gehäuse getragen wird;
einen Speicher (16), der von dem Gehäuse getragen wird; und
einen Stimmenänderungsprozessor (15), der von dem Gehäuse getragen wird und an den Mobilfunk-Sendeempfänger, den mindestens einen Audio-Wandler und den Speicher gekoppelt ist, wobei der Stimmenänderungsprozessor dazu konfiguriert ist:
Stimmenänderungscode und mindestens einen Satz Sprachkommunikationsparameter von einer Plattform für mobile Apps herunterzuladen, wobei jeder Satz Sprachkommunikationsparameter einen Tonhöhenwert, einen Zeitkonstantenwert, einen Nachhallwert, einen Obertonwert und einen Entzerrungswert aufweist;
mehrere Kontakte in dem Speicher zu speichern, wobei jeder Kontakt bevorzugte Frequenzbereichsdaten umfasst;
wahlweise Sprachkommunikationen basierend auf einer Identität eines anrufenden Benutzers, den jeweiligen bevorzugten Frequenzbereichsdaten für den anrufenden Benutzer und den mindestens einen Satz von Sprachkommunikationsparametern zu verändern, wobei das Verändern der Sprachkommunikationen zweiseitig erfolgt und das Verschieben von mindestens einem Teil der Sprachkommunikationen von einem ersten Frequenzbereich in einen zweiten Frequenzbereich basierend auf den bevorzugten Frequenzbereichsdaten des anrufenden Benutzers umfasst; und
den geänderten Sprachkommunikationen unechte Hintergrundgeräusche hinzuzufügen.

2. Mobilfunkvorrichtung nach Anspruch 1, wobei der Stimmenänderungsprozessor ferner dazu konfiguriert ist, den Stimmenänderungscode über den Mobilfunk-Sendeempfänger in den Speicher herunterzuladen.

3. Mobilfunkvorrichtung nach Anspruch 1, wobei der Stimmenänderungsprozessor dazu konfiguriert ist, in den mindestens einen Audio-Wandler eingegebene und über den Mobilfunk-Sendeempfänger übertragene Sprachkommunikationen zu ändern.

4. Mobilfunkvorrichtung nach Anspruch 1, wobei der Stimmenänderungsprozessor dazu konfiguriert ist, aus dem mindestens einen Audio-Wandler ausgegebene und über den Mobilfunk-Sendeempfänger empfangene Sprachkommunikation zu ändern.

5. Mobilfunkvorrichtung nach Anspruch 1, wobei der Stimmenänderungsprozessor ferner dazu konfiguriert ist, den geänderten Sprachkommunikationen Musik hinzuzufügen.

6. Verfahren zum Betreiben einer Mobilfunkvorrichtung (10), die ein Gehäuse (17), einen von dem Gehäuse getragenen Mobilfunk-Sendeempfänger (14), mindestens einen von dem Gehäuse getragenen Audio-Wandler (13), einen von dem Gehäuse getragenen Speicher (16) und einen von dem Gehäuse getragenen und an den Mobilfunk-Sendeempfänger, den Speicher und den mindestens einen Audio-Wandler gekoppelten Stimmenänderungsprozessor (15) umfasst, wobei das Verfahren die folgenden Schritte umfasst:
Konfigurieren des Stimmenänderungsprozessors, um Stimmenänderungscode und mindestens einen Satz Sprachkommunikationsparameter von einer Plattform für mobile Apps herunterzuladen, wobei jeder Satz Sprachkommunikationsparameter einen Tonhöhenwert, einen Zeitkonstantenwert, einen Nachhallwert, einen Obertonwert und einen Entzerrungswert aufweist;
Konfigurieren des Stimmenänderungsprozessors, um mehrere Kontakte in dem Speicher zu speichern, wobei jeder Kontakt bevorzugte Frequenzbereichsdaten umfasst;
Konfigurieren des Stimmenänderungsprozessors, um wahlweise Sprachkommunikationen basierend auf einer Identität eines anrufenden Benutzers, den jeweiligen bevorzugten Frequenzbereichsdaten für den anrufenden Benutzer und den mindestens einen Satz von Sprachkommunikationsparametern zu verändern, wobei das Verändern der Sprachkommunikationen zweiseitig erfolgt und das Verschieben von mindestens einem Teil der Sprachkommunikationen von einem ersten Frequenzbereich in einen zweiten Frequenzbereich basierend auf den bevorzugten Frequenzbereichsdaten des anrufenden Benutzers umfasst; und
Konfigurieren des Stimmenänderungsprozessors, um den geänderten Sprachkommunikationen unechte Hintergrundgeräusche hinzuzufügen.

7. Verfahren nach Anspruch 6, das ferner den Schritt des Herunterladens des Stimmenänderungscodes über den Mobilfunk-Sendeempfänger umfasst.

8. Verfahren nach Anspruch 6, das ferner den folgenden Schritt umfasst:
Konfigurieren des Stimmenänderungsprozessors, um Sprachkommunikationen zu ändern, die in den mindestens einen Audio-Wandler eingegeben und über den Mobilfunk-Sendeempfänger übertragen werden; und
Konfigurieren des Stimmenänderungsprozessors, um Sprachkommunikationen zu ändern, die von dem mindestens einen Audio-Wandler ausgegeben und über den Mobilfunk-Sendeempfänger empfangen werden.

## Revendications

1. Dispositif de communication mobile cellulaire (10) comprenant :
un boîtier (17) ;
un émetteur-récepteur cellulaire (14) porté par ledit boîtier ;
au moins un transducteur audio (13) porté par ledit boîtier ;
une mémoire (16) portée par ledit boîtier ; et
un processeur d'altération de la parole (15) porté par ledit boîtier et couplé audit émetteur-récepteur cellulaire, audit au moins un transducteur audio et à ladite mémoire, ledit processeur d'altération de la parole étant configuré pour :
télécharger du code d'altération de la parole et au moins un ensemble de paramètres de communication vocale à partir d'une plate-forme de stockage d'applications mobiles, chaque ensemble de paramètres de communication vocale comprenant une valeur de hauteur tonale, une valeur de constante temporelle, une valeur de réverbération, une valeur d'harmonique et une valeur d'égalisation ;
enregistrer une pluralité de contacts dans ladite mémoire, chaque contact comprenant des données de plage de fréquences préférées ;
altérer sélectivement les communications vocales en fonction d'une identité d'un utilisateur appelant, des données de la plage de fréquences préférées respective pour l'utilisateur appelant et dudit au moins un ensemble de paramètres de communication vocale, l'altération des communications vocales étant bidirectionnelle et comprenant le décalage d'au moins une partie des communications vocales entre une première plage de fréquences et une seconde plage de fréquences, en fonction des données de la plage de fréquences préférées pour l'utilisateur appelant ; et
ajouter des bruits de fond artificiels aux communications vocales altérées.

2. Dispositif de communication mobile cellulaire selon la revendication 1, dans lequel ledit processeur d'altération de la parole est en outre configuré pour télécharger le code d'altération de la parole vers la mémoire, via ledit émetteur-récepteur cellulaire.

3. Dispositif de communication mobile cellulaire selon la revendication 1, dans lequel ledit processeur d'altération de la parole est configuré pour altérer les communications vocales envoyées en entrée dudit au moins un transducteur audio et transmises via ledit émetteur-récepteur cellulaire.

4. Dispositif de communication mobile cellulaire selon la revendication 1, dans lequel ledit processeur d'altération de la parole est configuré pour altérer les communications vocales produites en sortie par ledit au moins un transducteur audio et reçues via ledit émetteur-récepteur cellulaire.

5. Dispositif de communication mobile cellulaire selon la revendication 1, dans lequel ledit processeur d'altération de la parole est en outre configuré pour ajouter de la musique aux communications vocales altérées.

6. Procédé de fonctionnement d'un dispositif de communication mobile cellulaire (10) comprenant un boîtier (17), un émetteur-récepteur cellulaire (14) porté par ledit boîtier, au moins un transducteur audio (13) porté par ledit boîtier, une mémoire (16) portée par ledit boîtier et un processeur d'altération de la parole (15) porté par ledit boîtier et couplé à l'émetteur-récepteur cellulaire, à la mémoire et audit au moins un transducteur audio, le procédé comprenant les étapes consistant à :
configurer le processeur d'altération de la parole afin de télécharger du code d'altération de la parole et au moins un ensemble de paramètres de communication vocale à partir d'une plate-forme de stockage d'applications mobiles, chaque ensemble de paramètres de communication vocale comprenant une valeur de hauteur tonale, une valeur de constante temporelle, une valeur de réverbération, une valeur d'harmonique et une valeur d'égalisation ;
configurer le processeur d'altération de la parole afin d'enregistrer une pluralité de contacts dans la mémoire, chaque contact comprenant des données de plage de fréquences préférées ;
configurer le processeur d'altération de la parole afin d'altérer sélectivement les communications vocales en fonction d'une identité d'un utilisateur appelant, des données de la plage de fréquences préférées respective pour l'utilisateur appelant et dudit au moins un ensemble de paramètres de communication vocale, l'altération des communications vocales étant bidirectionnelle et comprenant le décalage d'au moins une partie des communications vocales entre une première plage de fréquences et une seconde plage de fréquences, en fonction des données de la plage de fréquences préférées pour l'utilisateur appelant ; et
configurer le processeur d'altération de la parole afin d'ajouter des bruits de fond artificiels aux communications vocales altérées.

7. Procédé selon la revendication 6, comprenant en outre l'étape consistant à télécharger le code d'altération de la parole vers la mémoire, via ledit émetteur-récepteur cellulaire.

8. Procédé selon la revendication 6, comprenant en outre l'étape consistant à :
configurer le processeur d'altération de la parole afin d'altérer les communications vocales envoyées en entrée dudit au moins un transducteur audio et transmises via ledit émetteur-récepteur cellulaire ; et
configurer le processeur d'altération de la parole afin d'altérer les communications vocales produites en sortie par ledit au moins un transducteur audio et reçues via ledit émetteur-récepteur cellulaire.
